# FASCICULE DE BREVET EUROPEEN

(11) **EP 3 540 522 B1**
(45) Date de publication et mention de la délivrance du brevet: **28.10.2020**
(21) Numéro de dépôt: 18161388.6
(22) Date de dépôt: 13.03.2018
(51) Int. Cl.: G04B 19/02, G04B 19/08, G04B 19/24, G04B 19/26

(54) **MÉCANISME D'AFFICHAGE RÉTROGRADE D'HORLOGERIE**
RETROGRADER ANZEIGEMECHANISMUS FÜR UHR
RETROGRADE DISPLAY MECHANISM FOR A TIMEPIECE

(43) Date de publication de la demande: 18.09.2019
(73) Titulaire: Harry Winston SA, 1228 Plan-les-Ouates (CH)
(72) Inventeur: Reymond, Cédric, 1346 Les Bioux (CH)
(74) Mandataire: ICB SA

(56) Documents cités:
- EP-A1- 1 102 134
- EP-A1- 1 918 792
- WO-A2-2006/052012
- CH-B1- 701 836

## Description

### Domaine de l'invention

L'invention concerne un mécanisme d'affichage d'horlogerie, comportant au moins un premier moyen d'entraînement rétrograde d'un premier afficheur d'une première grandeur, et un deuxième moyen d'entraînement rétrograde d'un deuxième afficheur d'une deuxième grandeur, ledit premier moyen d'entraînement rétrograde comportant un premier râteau d'entraînement agencé pour exercer, directement ou indirectement, sur un premier mobile d'entraînement dudit premier afficheur un effort opposé à un effort résistant exercé par un premier râteau de rappel, et ledit deuxième moyen d'entraînement rétrograde comportant un deuxième râteau d'entraînement agencé pour exercer, directement ou indirectement, sur un deuxième mobile d'entraînement dudit deuxième afficheur, un effort opposé à un effort résistant exercé par un deuxième râteau de rappel.

L'invention concerne encore un mouvement d'horlogerie comportant un tel mécanisme d'affichage.

L'invention concerne encore une pièce d'horlogerie, notamment une montre, comportant un tel mouvement d'horlogerie, et/ou un tel mécanisme d'affichage.

L'invention concerne le domaine des mécanismes d'affichage rétrogrades d'horlogerie, notamment pour montres.

### Arrière-plan de l'invention

L'affichage rétrograde est une complication prisée en horlogerie, et qui permet de répartir, sur un cadran, une pluralité d'affichages distincts, restant chacun bien lisible.

Toutefois, les mécanismes d'affichage rétrograde occupent chacun un volume important dans la boîte d'une montre, et il n'est pas toujours possible de les loger correctement pour offrir à l'utilisateur un affichage avec une juxtaposition logique des différentes grandeurs affichées.

Le document EP1918792A1 au nom de LONGINES décrit une pièce d'horlogerie comprenant un mécanisme correcteur bidirectionnel pour un dispositif d'affichage d'une grandeur liée au temps, le dispositif d'affichage étant actionné par une bascule de commande elle-même commandée par une came sur laquelle la bascule de commande est en appui. La pièce d'horlogerie comprend un organe de correction actionné par une tige de commande qui, en phase de correction du dispositif d'affichage, permet d'écarter, via une bascule de rappel, la bascule de commande du trajet de la came sur laquelle la bascule de commande est normalement en appui en phase de fonctionnement normal de la pièce d'horlogerie.

### Résumé de l'invention

L'invention se propose de développer une combinaison entre plusieurs affichages rétrogrades, qui soit facilement adaptable aux volumes encore disponibles dans une boîte de montre, et en requérant la plus faible épaisseur possible, tout en faisant appel à des composants usuels et de coût modéré.

A cet effet, l'invention concerne un mécanisme d'affichage d'horlogerie selon la revendication 1.

L'invention concerne encore un mouvement d'horlogerie comportant un tel mécanisme d'affichage.

L'invention concerne encore une pièce d'horlogerie, notamment une montre, comportant un tel mouvement d'horlogerie, et/ou un tel mécanisme d'affichage.

### Description sommaire des dessins

D'autres caractéristiques et avantages de l'invention apparaîtront à la lecture de la description détaillée qui va suivre, en référence aux dessins annexés, où :
- la figure 1 représente, de façon schématisée, et en plan, un mécanisme d'affichage rétrograde selon l'invention, dans une application particulière à un premier mécanisme d'affichage des minutes traînant et rétrograde, et à un deuxième affichage des heures sautant et rétrograde;
- la figure 2 représente le mécanisme de la figure 1, de façon schématisée, et en coupe partielle au voisinage des différents axes de pivotement de la figure 1,
- la figure 3 représente, de façon schématisée, et en plan, une première variante d'une montre selon l'invention ;
- la figure 4 représente, de façon schématisée, et en plan, une deuxième variante d'une montre selon l'invention ;
- la figure 5 est un schéma-blocs représentant une montre, comportant un tel mouvement d'horlogerie entraînant un tel mécanisme d'affichage.

### Description détaillée des modes de réalisation préférés

L'invention concerne un mécanisme d'affichage 100 d'horlogerie, pour une pièce d'horlogerie 1000, et plus particulièrement pour une montre.

Ce mécanisme d'affichage 100 comporte au moins un premier moyen d'entraînement rétrograde 10 d'un premier afficheur 11 d'une première grandeur, et un deuxième moyen d'entraînement rétrograde 20 d'un deuxième afficheur 21 d'une deuxième grandeur.

L'invention est illustrée sur les figures pour une variante non limitative où la première grandeur est la minute, et où la deuxième grandeur est l'heure.

Le premier moyen d'entraînement rétrograde 10 comporte un premier râteau d'entraînement 12, qui est agencé pour exercer, directement ou indirectement, sur un premier mobile 16 d'entraînement du premier afficheur 11, un effort opposé à un effort résistant exercé par un premier râteau de rappel 17.

Et le deuxième moyen d'entraînement rétrograde 20 comporte un deuxième râteau d'entraînement 26, qui est agencé pour exercer, directement ou indirectement, sur un deuxième mobile 210 d'entraînement du deuxième afficheur 21, un effort opposé à un effort résistant exercé par un deuxième râteau de rappel 29.

De façon particulière, et tel que visible sur les figures, le premier mobile 16 et le deuxième mobile 210 sont coaxiaux selon un axe de pivotement D0. Plus particulièrement encore, le premier mobile 16 et le deuxième mobile 210 sont coaxiaux avec une chaussée que comporte un mouvement d'horlogerie 500, agencé pour entraîner le mécanisme d'affichage 100, ou auquel est incorporé ce mécanisme d'affichage 100, selon ce même axe de pivotement D0.

Selon l'invention, l'axe de pivotement du premier râteau d'entraînement 12 est distant de l'axe de pivotement du premier râteau de rappel 17 et/ou l'axe de pivotement du deuxième râteau d'entraînement 26 est distant de l'axe de pivotement du deuxième râteau de rappel 29.

Dans la variante illustrée par les figures, l'axe de pivotement D1 du premier râteau d'entraînement 12 des minutes est distant de l'axe de pivotement D6 du premier râteau de rappel 17 des minutes, et l'axe de pivotement du deuxième râteau d'entraînement 26 des heures est confondu avec l'axe de pivotement D2 du deuxième râteau de rappel 29 des heures.

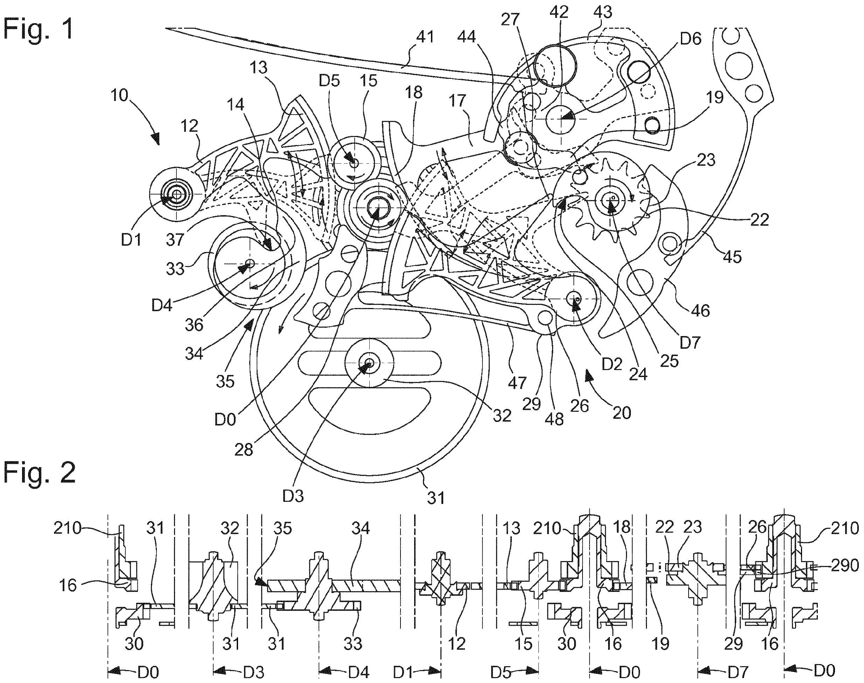

Plus particulièrement, et tel que visible sur les figures 1 et 2, le premier râteau d'entraînement 12 est agencé pour exercer indirectement sur le premier mobile 16, au travers d'un premier renvoi inverseur 15, d'axe de pivotement D5, engrenant avec le premier mobile 16, un effort opposé à un effort résistant exercé directement sur le premier mobile 16 par le premier râteau de rappel 17.

Dans la variante illustrée par les figures, le deuxième râteau d'entraînement 26 est agencé pour exercer directement sur le deuxième mobile 210 d'entraînement du deuxième afficheur 21, un effort opposé à un effort résistant exercé par le deuxième râteau de rappel 29.

Dans une autre variante non illustrée, le premier râteau d'entraînement 12 est agencé pour exercer directement sur le premier mobile 16 un effort opposé à un effort résistant exercé indirectement sur le premier mobile 16, au travers d'un premier renvoi inverseur de rappel engrenant avec le premier mobile 16, par le premier râteau de rappel 17.

Dans encore une autre variante non illustrée, le deuxième râteau d'entraînement 26 est agencé pour exercer indirectement sur le deuxième mobile 210, au travers d'un deuxième renvoi inverseur engrenant avec le deuxième mobile 210, un effort opposé à un effort résistant exercé directement sur le deuxième mobile 210 par le deuxième râteau de rappel 29.

Dans encore une autre variante non illustrée, le deuxième râteau d'entraînement 26 est agencé pour exercer directement sur le deuxième mobile 210 un effort opposé à un effort résistant exercé indirectement sur le deuxième mobile 210, au travers d'un deuxième renvoi inverseur de rappel engrenant avec le deuxième mobile 210, par le deuxième râteau de rappel 29.

Dans cette variante illustrée, l'axe de pivotement D1 du premier râteau d'entraînement 12 est distant de l'axe de pivotement D6 du premier râteau de rappel 17, et l'axe de pivotement du premier mobile 16 est situé entre l'axe de pivotement D1 du premier râteau d'entraînement 12 et l'axe de pivotement D6 du premier râteau de rappel 17.

Plus particulièrement encore, le premier râteau d'entraînement 12 est agencé pour exercer indirectement sur le premier mobile 16, au travers du premier renvoi inverseur 15 engrenant avec le premier mobile 16, un effort opposé à un effort résistant exercé directement sur le premier mobile 16 par le premier râteau de rappel 17, et l'axe de pivotement D5 du premier renvoi inverseur 15 est situé entre l'axe de pivotement D1 du premier râteau d'entraînement 12 et l'axe de pivotement D6 du premier râteau de rappel 17.

Dans une autre variante non illustrée, l'axe de pivotement du deuxième râteau d'entraînement 26 est distant de l'axe de pivotement du deuxième râteau de rappel 29, et l'axe de pivotement du deuxième mobile 210 est situé entre l'axe de pivotement du deuxième râteau d'entraînement 26 et l'axe de pivotement du deuxième râteau de rappel 29.

Dans encore une autre variante non illustrée, le deuxième râteau d'entraînement 26 est agencé pour exercer indirectement sur le deuxième mobile 210, au travers d'un deuxième renvoi inverseur engrenant avec le deuxième mobile 210, un effort opposé à un effort résistant exercé directement sur le deuxième mobile 210 par le deuxième râteau de rappel 29, et l'axe de pivotement du deuxième renvoi inverseur est situé entre l'axe de pivotement du deuxième râteau d'entraînement 26 et l'axe de pivotement du deuxième râteau de rappel 29.

Plus particulièrement, et dans la variante de réalisation non limitative illustrée par les figures, le premier moyen d'entraînement rétrograde 10 est agencé pour commander un mouvement traînant et rétrograde du premier afficheur 11, et le deuxième moyen d'entraînement rétrograde 20 est agencé pour commander un mouvement sautant et rétrograde du deuxième afficheur 12.

Plus particulièrement, le premier moyen d'entraînement rétrograde 10 comporte une première came 34, laquelle comporte une première rampe 35, qui est agencée pour entraîner un premier palpeur 14 que comporte le premier râteau d'entraînement 12 dans une course de travail dans un premier sens d'entraînement du premier afficheur 11. Ce premier palpeur 14 est ici l'extrémité d'un bras sensiblement perpendiculaire à la direction générale selon laquelle s'étend le premier râteau d'entraînement 12, en son milieu.

Cette première came 34 comporte, sur le plus grand diamètre de la première rampe 35, un seuil 36, qui est suivi d'un dégagement 37 de débrayage du premier râteau d'entraînement 12, et qui est agencé pour autoriser le retour du premier palpeur 14 sur le plus petit diamètre de la rampe 35 sous l'action d'un couple de rappel exercé indirectement sur le premier râteau d'entraînement 12 par le premier râteau de rappel 17 lors d'une course de retour à vide du premier râteau de rappel 17. Dans la variante de la figure 1, la première came 34 est une came-escargot.

Dans cette variante des figures, le premier moyen d'entraînement rétrograde 10 est agencé pour entraîner le deuxième moyen d'entraînement rétrograde 20 par le moyen d'un cliquet. Ce cliquet porte un doigt entraîneur 19, qui est agencé pour entraîner un mobile d'entrée 22, d'axe de pivotement D7, et que comporte le deuxième moyen d'entraînement rétrograde 20, pendant la course de retour à vide.

Plus particulièrement, la première came 34 est entraînée depuis un mobile moteur 30, lequel est agencé pour être entraîné par un mouvement 500, ou que comporte un mouvement 500, et notamment par l'intermédiaire d'un rouage. Plus particulièrement, le rouage comporte au moins une liaison à friction agencée pour autoriser un réglage de la position du premier afficheur 11. Naturellement, une liaison à friction similaire peut être insérée ailleurs, dans le rouage d'entraînement du premier afficheur 11, et/ou du deuxième afficheur 21, ou de tout autre afficheur que comporte le mécanisme d'affichage 100.

Le rouage comporte, dans la variante des figures, depuis le mobile moteur 30, une roue à friction 31 et un mobile à friction 32, la roue 31 engrène avec un pignon 33, d'axe de pivotement D4, porteur de la première came 34.

De façon particulière, tel que visible sur la figure 1, le premier râteau de rappel 17 porte le doigt entraîneur 19, qui est pivotant et est soumis au couple d'un ressort de rappel 43 fixé sur le premier râteau de rappel 17, et qui est en appui sur un bossage 44 ou similaire. Ce doigt entraîneur 19 est agencé pour entraîner une étoile que comporte le mobile d'entrée 22, et qui est agencée pour entraîner en rotation une deuxième came 23 que comporte le deuxième moyen d'entraînement rétrograde 20.

Plus particulièrement, la deuxième came 23 comporte une deuxième rampe, qui est agencée pour entraîner un deuxième palpeur 27, que comporte le deuxième râteau d'entraînement 26, dans une course de travail dans un premier sens d'entraînement du deuxième afficheur 12. Ce deuxième palpeur 27 est ici l'extrémité d'un bras incliné d'environ 60° avec la direction générale du deuxième râteau d'entraînement 26, en son milieu.

Cette deuxième came 23 comporte, sur le plus grand diamètre de la deuxième rampe, un seuil 24 suivi d'un dégagement 25 de débrayage du deuxième râteau d'entraînement 26, et qui est agencé pour autoriser le retour du deuxième palpeur 27 sur le plus petit diamètre de la rampe 35 sous l'action d'un couple de rappel exercé indirectement sur le premier râteau d'entraînement 12 par le premier râteau de rappel 17 lors d'une course de retour à vide du premier râteau de rappel 17.

En somme, le doigt entraîneur 19 est embrayé avec le mobile d'entrée 22 pendant la course de retour à vide, et débrayé de ce mobile d'entrée 22 pendant la course de travail.

Dans une variante, tel que visible sur la figure 1, la deuxième came 23 est une came escargot dont la deuxième rampe est lisse.

Dans une autre variante non illustrée, la deuxième rampe de la deuxième came 23 est une came étagée comportant un étage pour chaque unité de la deuxième grandeur.

Plus particulièrement, le premier râteau de rappel 17 est soumis en permanence au couple de rappel exercé par un premier ressort-sautoir 41, par exemple en appui sur un bossage ou une première goupille 42 ; et le deuxième râteau de rappel 29 est plus particulièrement soumis en permanence au couple de rappel exercé par un deuxième ressort-sautoir 47, en appui sur une deuxième goupille 48, ou similaire.

Dans une variante non illustrée, à la fois l'axe de pivotement du premier râteau d'entraînement 12 est distant de l'axe de pivotement du premier râteau de rappel 17, et l'axe de pivotement du deuxième râteau d'entraînement 26 est distant de l'axe de pivotement du deuxième râteau de rappel 29.

La variante non limitative illustrée concerne le cas où le premier afficheur 11 est un afficheur de minutes, et le deuxième afficheur 21 est un afficheur d'heures.

Dans une autre variante non illustrée, le premier afficheur 11 est un afficheur d'heures, et le deuxième afficheur 21 est un afficheur AM/PM ou jour/nuit ou de quantième.

Dans encore une autre variante non illustrée, le premier afficheur 11 est un afficheur AM/PM ou jour/nuit ou de quantième, et le deuxième afficheur 21 est un afficheur de mois ou de mois lunaire.

Dans encore une autre variante non illustrée, le premier afficheur 11 est un afficheur de mois ou de mois lunaire, et le deuxième afficheur 21 est un afficheur d'année.

Plus particulièrement, le mécanisme d'affichage 100 comporte un affichage de quantième, qui comporte un renvoi à friction, avec une roue à friction 31 et un mobile de friction 32, selon l'axe D3, et lequel renvoi à friction est incorporé dans le rouage entre le mobile moteur 30 et la première came 34.

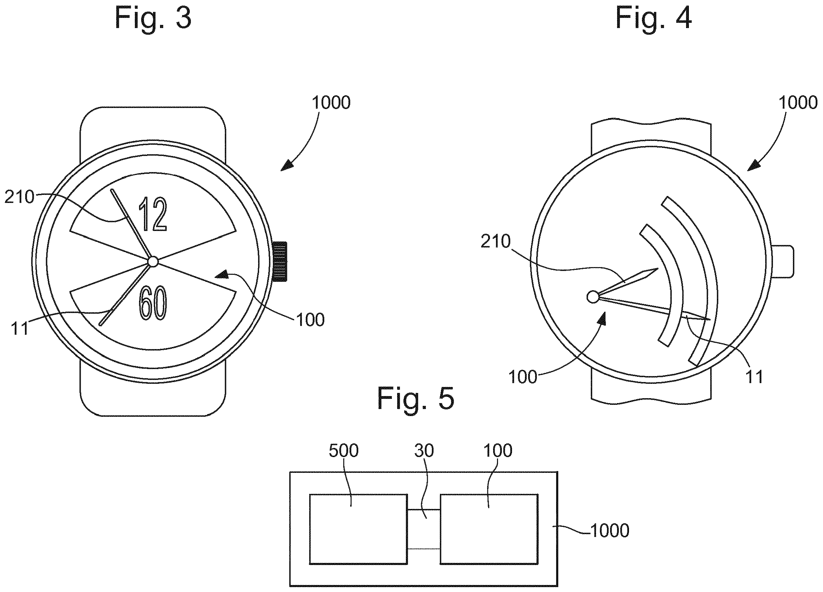

Dans cet exemple particulier, l'information est prise sur la chaussée du mouvement, la friction du quantième est utilisée en tant que renvoi jusqu'au pignon 33 du mobile de première came 34. Cette première came 34 tourne à 360° et entraîne le premier palpeur 14 du premier râteau d'entraînement 12 sur une course ici d'environ 25°. Cet angle, rapporté au centre de l'affichage sur l'axe de pivotement D0 par la denture 13 du premier râteau d'entraînement 12, en combinaison avec le premier renvoi 15 et le premier mobile 16, affiche les minutes sur une amplitude angulaire de 140°, tel que visible sur la figure 3. Son rappel se fait avec le premier râteau de rappel 17, l'affichage de la minute est ainsi traînant et rétrograde.

Le premier râteau de rappel 17 s'arme avec la menée des minutes, son cliquet embarqué déclique sur l'étoile des heures rétrogrades 22 lors de son chargement, sans l'entraîner. Après une durée de 60 minutes la chute du premier râteau de rappel 17 entraîne son cliquet embarqué, dont le doigt entraîneur 19 percute l'étoile 22, et lui applique sa rotation. Un sautoir 46 combiné à un ressort de sautoir 45 permet le maintien en position de l'étoile 22 après sa rotation. Lors de chaque saut, l'étoile 22, qui a ici douze dents, tourne de 1/12 de tour. Le deuxième râteau d'entraînement 26, coaxial avec le deuxième râteau de rappel 29 selon l'axe de pivotement D2, prend l'information sur la deuxième came 23, solidaire en pivotement de l'étoile des heures 22, par son deuxième palpeur 27, et affiche précisément chaque heure sur un affichage de 140°. L'affichage de l'heure est sautant et rétrograde.

L'invention concerne encore un mouvement d'horlogerie 500 comportant au moins un tel mécanisme d'affichage 100. Plus particulièrement, ce mouvement 500 comporte un mobile d'entrée 30, qui est agencé pour entraîner le premier moyen d'entraînement rétrograde 10.

L'invention concerne encore une pièce d'horlogerie, notamment une montre 1000, comportant un tel mouvement 500, et/ou au moins un tel mécanisme d'affichage 100. Plus particulièrement, le mouvement d'horlogerie 500 est agencé pour entraîner un mobile d'entrée 30 du mécanisme d'affichage 100.

## Revendications

1. Mécanisme d'affichage (100) d'horlogerie, comportant au moins un premier moyen d'entraînement rétrograde (10) d'un premier afficheur (11) d'une première grandeur, et un deuxième moyen d'entraînement rétrograde (20) d'un deuxième afficheur (21) d'une deuxième grandeur, ledit premier moyen d'entraînement rétrograde (10) comportant un premier râteau d'entraînement (12) agencé pour exercer, directement ou indirectement, sur un premier mobile (16) d'entraînement dudit premier afficheur (11) un effort opposé à un effort résistant exercé par un premier râteau de rappel (17), et ledit deuxième moyen d'entraînement rétrograde (20) comportant un deuxième râteau d'entraînement (26) agencé pour exercer, directement ou indirectement, sur un deuxième mobile (210) d'entraînement dudit deuxième afficheur (21) un effort opposé à un effort résistant exercé par un deuxième râteau de rappel (29), l'axe de pivotement dudit premier râteau d'entraînement (12) étant distant de l'axe de pivotement dudit premier râteau de rappel (17) et/ou l'axe de pivotement dudit deuxième râteau d'entraînement (26) étant distant de l'axe de pivotement dudit deuxième râteau de rappel (29), **caractérisé en ce que** ledit premier moyen d'entraînement rétrograde (10) comporte une première came (34) comportant une première rampe (35) agencée pour entraîner un premier palpeur (14) que comporte ledit premier râteau d'entraînement (12) dans une course de travail dans un premier sens d'entraînement dudit premier afficheur (11), et qui comporte, sur le plus grand diamètre de ladite première rampe (35), un seuil (36) suivi d'un dégagement (37) de débrayage dudit premier râteau d'entraînement (12) agencé pour autoriser le retour dudit premier palpeur (14) sur le plus petit diamètre de ladite rampe (35) sous l'action d'un couple de rappel exercé indirectement sur ledit premier râteau d'entraînement (12) par ledit premier râteau de rappel (17) lors d'une course de retour à vide dudit premier râteau de rappel (17), et **en ce que** ledit premier moyen d'entraînement rétrograde (10) est agencé pour entraîner ledit deuxième moyen d'entraînement rétrograde (20) par le moyen d'un cliquet portant un doigt entraîneur (19) agencé pour entraîner un mobile d'entrée (22) que comporte ledit deuxième moyen d'entraînement rétrograde (20) pendant ladite course de retour à vide.

2. Mécanisme d'affichage (100) d'horlogerie selon la revendication 1, **caractérisé en ce que** ladite première came (34) est entraînée depuis un mobile moteur (30) agencé pour être entraîné par un mouvement (500) ou que comporte un mouvement (500).

3. Mécanisme d'affichage (100) d'horlogerie selon la revendication 2, **caractérisé en ce que** ladite première came (34) est entraînée depuis ledit mobile moteur (30) par l'intermédiaire d'un rouage, lequel comporte au moins une liaison à friction agencée pour autoriser un réglage de la position dudit premier afficheur (11).

4. Mécanisme d'affichage (100) d'horlogerie selon l'une des revendications 1 à 3, **caractérisé en ce que** ledit premier râteau de rappel (17) porte ledit doigt entraîneur (19) qui est pivotant et soumis au couple d'un ressort de rappel (43) fixé sur ledit premier râteau de rappel (17), et lequel doigt entraîneur (19) est agencé pour entraîner une étoile que comporte ledit mobile d'entrée (22) et qui est agencée pour entraîner en rotation une deuxième came (23) que comporte ledit deuxième moyen d'entraînement rétrograde (20).

5. Mécanisme d'affichage (100) d'horlogerie selon l'une des revendications 1 à 4, **caractérisé en ce que** ladite deuxième came (23) comporte une deuxième rampe agencée pour entraîner un deuxième palpeur (27) que comporte ledit deuxième râteau d'entraînement (26) dans une course de travail dans un premier sens d'entraînement dudit deuxième afficheur (12), et qui comporte, sur le plus grand diamètre de ladite deuxième rampe, un seuil (24) suivi d'un dégagement (25) de débrayage dudit deuxième râteau d'entraînement (26) agencé pour autoriser le retour dudit deuxième palpeur (27) sur le plus petit diamètre de ladite rampe (35) sous l'action d'un couple de rappel exercé indirectement sur ledit premier râteau d'entraînement (12) par ledit premier râteau de rappel (17) lors d'une course de retour à vide dudit premier râteau de rappel (17), et **en ce que** ledit premier moyen d'entraînement rétrograde (10) est agencé pour entraîner ledit deuxième moyen d'entraînement rétrograde (20) par le moyen dudit doigt entraîneur (19), qui est embrayé avec ledit mobile d'entrée (22) pendant ladite course de retour à vide, et qui est débrayé dudit mobile d'entrée (22) pendant ladite course de travail.

6. Mécanisme d'affichage (100) d'horlogerie selon la revendication 5, **caractérisé en ce que** ladite deuxième came (23) est une came escargot dont ladite deuxième rampe est lisse.

7. Mécanisme d'affichage (100) d'horlogerie selon la revendication 5, **caractérisé en ce que** ladite deuxième rampe de ladite deuxième came (23) est une came étagée comportant un étage pour chaque unité de ladite deuxième grandeur.

8. Mécanisme d'affichage (100) d'horlogerie selon l'une des revendications 1 à 7, **caractérisé en ce que** ledit premier râteau d'entraînement (12) est agencé pour exercer indirectement sur ledit premier mobile (16), au travers d'un premier renvoi inverseur (15) engrenant avec ledit premier mobile (16), un effort opposé à un effort résistant exercé directement sur ledit premier mobile (16) par ledit premier râteau de rappel (17), ou bien **en ce que** ledit premier râteau d'entraînement (12) est agencé pour exercer directement sur ledit premier mobile (16) un effort opposé à un effort résistant exercé indirectement sur ledit premier mobile (16), au travers d'un premier renvoi inverseur de rappel engrenant avec ledit premier mobile (16), par ledit premier râteau de rappel (17).

9. Mécanisme d'affichage (100) d'horlogerie selon l'une des revendications 1 à 8, **caractérisé en ce que** ledit deuxième râteau d'entraînement (26) est agencé pour exercer indirectement sur ledit deuxième mobile (210), au travers d'un deuxième renvoi inverseur engrenant avec ledit deuxième mobile (210), un effort opposé à un effort résistant exercé directement sur ledit deuxième mobile (210) par ledit deuxième râteau de rappel (29), ou bien **en ce que** ledit deuxième râteau d'entraînement (26) est agencé pour exercer directement sur ledit deuxième mobile (210) un effort opposé à un effort résistant exercé indirectement sur ledit deuxième mobile (210), au travers d'un deuxième renvoi inverseur de rappel engrenant avec ledit deuxième mobile (210), par ledit deuxième râteau de rappel (29).

10. Mécanisme d'affichage (100) d'horlogerie selon l'une des revendications 1 à 9, **caractérisé en ce que** l'axe de pivotement (D1) dudit premier râteau d'entraînement (12) est distant de l'axe de pivotement (D6) dudit premier râteau de rappel (17), et **en ce que** l'axe de pivotement dudit premier mobile (16) est situé entre l'axe de pivotement (D1) dudit premier râteau d'entraînement (12) et l'axe de pivotement (D6) dudit premier râteau de rappel (17).

11. Mécanisme d'affichage (100) d'horlogerie selon la revendication 10, **caractérisé en ce que** ledit premier râteau d'entraînement (12) est agencé pour exercer indirectement sur ledit premier mobile (16), au travers d'un premier renvoi inverseur (15) engrenant avec ledit premier mobile (16), un effort opposé à un effort résistant exercé directement sur ledit premier mobile (16) par ledit premier râteau de rappel (17), et **en ce que** l'axe de pivotement (D5) dudit premier renvoi inverseur (15) est situé entre l'axe de pivotement (D1) dudit premier râteau d'entraînement (12) et l'axe de pivotement (D6) dudit premier râteau de rappel (17).

12. Mécanisme d'affichage (100) d'horlogerie selon l'une des revendications 1 à 11, **caractérisé en ce que** l'axe de pivotement dudit deuxième râteau d'entraînement (26) est distant de l'axe de pivotement dudit deuxième râteau de rappel (29), et **en ce que** l'axe de pivotement dudit deuxième mobile (210) est situé entre l'axe de pivotement dudit deuxième râteau d'entraînement (26) et l'axe de pivotement dudit deuxième râteau de rappel (29).

13. Mécanisme d'affichage (100) d'horlogerie selon la revendication 12, **caractérisé en ce que** ledit deuxième râteau d'entraînement (26) est agencé pour exercer indirectement sur ledit deuxième mobile (210), au travers d'un deuxième renvoi inverseur engrenant avec ledit deuxième mobile (210), un effort opposé à un effort résistant exercé directement sur ledit deuxième mobile (210) par ledit deuxième râteau de rappel (29), et **en ce que** l'axe de pivotement dudit deuxième renvoi inverseur est situé entre l'axe de pivotement dudit deuxième râteau d'entraînement (26) et l'axe de pivotement dudit deuxième râteau de rappel (29).

14. Mécanisme d'affichage (100) d'horlogerie selon l'une des revendications 1 à 13, **caractérisé en ce que** ledit premier moyen d'entraînement rétrograde (10) est agencé pour commander un mouvement traînant et rétrograde dudit premier afficheur (11), et **en ce que** ledit deuxième moyen d'entraînement rétrograde (20) est agencé pour commander un mouvement sautant et rétrograde dudit deuxième afficheur (12).

15. Mécanisme d'affichage (100) d'horlogerie selon l'une des revendications 1 à 14, **caractérisé en ce que** ledit premier râteau de rappel (17) est soumis en permanence au couple de rappel exercé par un premier ressort-sautoir (41), et **en ce que** ledit deuxième râteau de rappel (29) est soumis en permanence au couple de rappel exercé par un deuxième ressort-sautoir (47).

16. Mécanisme d'affichage (100) d'horlogerie selon l'une des revendications 1 à 15, **caractérisé en ce qu'**à la fois l'axe de pivotement dudit premier râteau d'entraînement (12) est distant de l'axe de pivotement dudit premier râteau de rappel (17), et l'axe de pivotement dudit deuxième râteau d'entraînement (26) est distant de l'axe de pivotement dudit deuxième râteau de rappel (29).

17. Mécanisme d'affichage (100) d'horlogerie selon l'une des revendications 1 à 16, **caractérisé en ce que** ledit premier afficheur (11) est un afficheur de minutes, et ledit deuxième afficheur (21) est un afficheur d'heures.

18. Mécanisme d'affichage (100) d'horlogerie selon l'une des revendications 1 à 16, **caractérisé en ce que** ledit premier afficheur (11) est un afficheur d'heures, et ledit deuxième afficheur (21) est un afficheur AM/PM ou jour/nuit ou de quantième.

19. Mécanisme d'affichage (100) d'horlogerie selon l'une des revendications 1 à 16, **caractérisé en ce que** ledit premier afficheur (11) est un afficheur AM/PM ou jour/nuit ou de quantième, et ledit deuxième afficheur (21) est un afficheur de mois ou de mois lunaire.

20. Mécanisme d'affichage (100) d'horlogerie selon l'une des revendications 1 à 16, **caractérisé en ce que** ledit premier afficheur (11) est un afficheur de mois ou de mois lunaire, et ledit deuxième afficheur (21) est un afficheur d'année.

21. Mécanisme d'affichage (100) d'horlogerie selon la revendication 10 et l'une des revendications 1 à 20, **caractérisé en ce que** ledit mécanisme d'affichage (100) comporte un affichage de quantième comportant un renvoi à friction qui est incorporé dans ledit rouage entre ledit mobile moteur (30) et ladite première came (34).

22. Mouvement d'horlogerie (500) comportant au moins un mécanisme d'affichage (100) d'horlogerie selon l'une des revendications 1 à 21, et comportant un mobile d'entrée (30) agencé pour entraîner ledit premier moyen d'entraînement rétrograde (10).

23. Montre (1000) comportant un mouvement (500) selon la revendication 22, et/ou au moins un mécanisme d'affichage (100) selon l'une des revendications 1 à 21 et un mouvement d'horlogerie (500) agencé pour entraîner un mobile d'entrée (30) dudit mécanisme d'affichage (100).

## Patentansprüche

1. Uhrenanzeigemechanismus (100), mindestens ein erstes retrogrades Antriebsmittel (10) einer ersten Anzeigeeinheit (11) einer ersten Größe, und ein zweites retrogrades Antriebsmittel (20) einer zweiten Anzeigeeinheit (21) einer zweiten Größe beinhaltend, wobei das erste retrograde Antriebsmittel (10) einen ersten Antriebsrechen (12) beinhaltet, der angeordnet ist, um direkt oder indirekt eine entgegengesetzte Beanspruchung zu einer durch einen ersten Rückzugsrechen (17) ausgeübten Widerstandsbeanspruchung auf ein erstes bewegliches Antriebsbauteil (16) der ersten Anzeigeeinheit (11) auszuüben, und wobei das zweite retrograde Antriebsmittel (20) einen zweiten Antriebsrechen (26) beinhaltet, der angeordnet ist, um direkt oder indirekt eine entgegengesetzte Beanspruchung zu einer durch einen zweiten Rückzugsrechen (29) ausgeübten Widerstandsbeanspruchung auf ein zweites bewegliches Antriebsbauteil (210) der zweiten Anzeigeeinheit (21) auszuüben, wobei die Drehachse des ersten Antriebsrechens (12) von der Drehachse des ersten Rückzugsrechens (17) beabstandet ist, und/oder die Drehachse des zweiten Antriebsrechens (26) von der Drehachse des zweiten Rückzugsrechens (29) beabstandet ist, **dadurch gekennzeichnet, dass** das erste retrograde Antriebsmittel (10) eine erste Kurvenscheibe (34) beinhaltet, die eine erste Rampe (35) beinhaltet, die angeordnet ist, um einen ersten Taststift (14), den der erste Antriebsrechen (12) beinhaltet, auf einem Arbeitsweg in einer ersten Antriebsrichtung der ersten Anzeigeeinheit (11) anzutreiben, und die auf dem größten Durchmesser der ersten Rampe (35) eine Schwelle (36), gefolgt von einer Auslösung (37) zum Auskuppeln des ersten Antriebsrechens (12) beinhaltet, die angeordnet ist, um den Rückzug des ersten Taststifts (14) auf den kleinsten Durchmesser der Rampe (35) unter der Wirkung eines Rückzugsmoments zu erlauben, das indirekt auf den ersten Antriebsrechen (12) durch den ersten Rückzugsrechen (17) bei einem unbelasteten Rückzugsweg des ersten Rückzugsrechens (17) ausgeübt wird, und dadurch, dass das erste retrograde Antriebsmittel (10) angeordnet ist, um das zweite retrograde Antriebsmittel (20) anhand eines Sperrkegels anzutreiben, der einen Antriebsfinger (19) trägt, der angeordnet ist, um ein bewegliches Eingangsbauteil (22), das das zweite retrograde Antriebsmittel (20) während des unbelasteten Rückzugswegs beinhaltet, anzutreiben.

2. Uhrenanzeigemechanismus (100) nach Anspruch 1, **dadurch gekennzeichnet, dass** die erste Kurvenscheibe (34) aus einem beweglichem Triebbauteil (30) angetrieben wird, das angeordnet ist, um durch eine Bewegung (500) oder was eine Bewegung (500) beinhaltet, angetrieben zu werden.

3. Uhrenanzeigemechanismus (100) nach Anspruch 2, **dadurch gekennzeichnet, dass** die erste Kurvenscheibe (34) aus dem beweglichem Triebbauteil (30) anhand eines Räderwerks angetrieben wird, welches mindestens eine Reibungsverbindung beinhaltet, die angeordnet ist, um eine Einstellung der Position der ersten Anzeigeeinheit (11) zu erlauben.

4. Uhrenanzeigemechanismus (100) nach einem der Ansprüche 1 bis 3, **dadurch gekennzeichnet, dass** der erste Rückzugsrechen (17) den Antriebsfinger (19) trägt, der drehend ist und einem Moment einer Rückzugsfeder (43) ausgesetzt ist, die an dem ersten Rückzugsrechen (17) befestigt ist, und der Antriebsfinger (19) angeordnet ist, um einen Stern anzutreiben, den das bewegliches Eingangsbauteil (22) beinhaltet, und der angeordnet ist, um eine zweite Kurvenscheibe (23), die das zweite retrograde Antriebsmittel (20) beinhaltet, in Drehung anzutreiben.

5. Uhrenanzeigemechanismus (100) nach einem der Ansprüche 1 bis 4, **dadurch gekennzeichnet, dass** die zweite Kurvenscheibe (23) eine zweite Rampe beinhaltet, die angeordnet ist, um einen zweiten Taststift (27), den der zweite Antriebsrechen (26) beinhaltet, auf einem Arbeitsweg in einer ersten Antriebsrichtung der zweiten Anzeigeeinheit (12) anzutreiben, und die auf dem größten Durchmesser der zweiten Rampe eine Schwelle (24), gefolgt von einer Auslösung (25) zum Auskuppeln des zweiten Antriebsrechens (26) beinhaltet, die angeordnet ist, um den Rückzug des zweiten Taststifts (27) auf den kleinsten Durchmesser der Rampe (35) unter der Wirkung eines Rückzugsmoments zu erlauben, das indirekt auf den ersten Antriebsrechen (12) durch den ersten Rückzugsrechen (17) bei einem unbelasteten Rückzugsweg des ersten Rückzugsrechens (17) ausgeübt wird, und dadurch, dass das erste retrograde Antriebsmittel (10) angeordnet ist, um das zweite retrograde Antriebsmittel (20) anhand des Antriebsfingers (19) anzutreiben, der mit dem beweglichem Eingangsbauteil (22) während des unbelasteten Rückzugswegs eingekuppelt ist, und der aus dem beweglichem Eingangsbauteil (22) während des Arbeitswegs ausgekuppelt ist.

6. Uhrenanzeigemechanismus (100) nach Anspruch 5, **dadurch gekennzeichnet, dass** die zweite Kurvenscheibe (23) eine Schneckenkurvenscheibe ist, deren zweite Rampe glatt ist.

7. Uhrenanzeigemechanismus (100) nach Anspruch 5, **dadurch gekennzeichnet, dass** die zweite Rampe der zweiten Kurvenscheibe (23) eine abgestufte Kurvenscheibe ist, die eine Stufe für jede Einheit der zweiten Größe beinhaltet.

8. Uhrenanzeigemechanismus (100) nach einem der Ansprüche 1 bis 7, **dadurch gekennzeichnet, dass** der erste Antriebsrechen (12) angeordnet ist, um indirekt auf das erste Drehteil (16) durch ein erstes Umkehrvorgelege (15) hindurch, das mit dem ersten Drehteil (16) eingreift, eine entgegengesetzte Beanspruchung zu einer Widerstandsbeanspruchung auszuüben, die direkt auf das erste Drehteil (16) durch den ersten Rückzugsrechen (17) ausgeübt wird, oder aber dadurch, dass der erste Antriebsrechen (12) angeordnet ist, um direkt das erste Drehteil (16) eine entgegengesetzte Beanspruchung zu einer Widerstandsbeanspruchung, die indirekt auf das erste Drehteil (16) ausgeübt wird, durch ein erstes Rückzugsumkehrvorgelege hindurch, das mit dem ersten Drehteil (16) eingreift, durch den ersten Rückzugsrechen (17) auszuüben.

9. Uhrenanzeigemechanismus (100) nach einem der Ansprüche 1 bis 8, **dadurch gekennzeichnet, dass** der zweite Antriebsrechen (26) angeordnet ist, um indirekt auf das zweite Drehteil (210) durch ein zweites Umkehrvorgelege hindurch, das mit dem zweiten Drehteil (210) eingreift, eine entgegengesetzte Beanspruchung zu einer Widerstandsbeanspruchung auszuüben, die direkt auf das zweite Drehteil (210), durch den zweiten Rückzugsrechen (29) ausgeübt wird, oder aber dadurch, dass der zweite Antriebsrechen (26) angeordnet ist, um direkt auf das zweite Drehteil (210) eine entgegengesetzte Beanspruchung zu einer Widerstandsbeanspruchung, die indirekt auf das zweite Drehteil (210) ausgeübt wird, durch ein zweites Rückzugsumkehrvorgelege hindurch, das mit dem zweiten Drehteil (210) eingreift, durch den zweiten Rückzugsrechen (29) auszuüben.

10. Uhrenanzeigemechanismus (100) nach einem der Ansprüche 1 bis 9, **dadurch gekennzeichnet, dass** die Drehachse (D1) des ersten Antriebsrechens (12) von der Drehachse (D6) des ersten Rückzugsrechens (17) beabstandet ist, und dadurch, dass sich die Drehachse des ersten Drehteils (16) zwischen der Drehachse (D1) des ersten Antriebsrechens (12) und der Drehachse (D6) des ersten Rückzugsrechens (17) befindet.

11. Uhrenanzeigemechanismus (100) Anspruch 10, **dadurch gekennzeichnet, dass** der erste Antriebsrechen (12) angeordnet ist, um indirekt auf das erste Drehteil (16) durch ein erstes Umkehrvorgelege (15) hindurch, das mit dem ersten Drehteil (16) eingreift, eine entgegengesetzte Beanspruchung zu einer Widerstandsbeanspruchung auszuüben, die direkt auf das erste Drehteil (16) durch den ersten Rückzugsrechen (17) ausgeübt wird, und dadurch, dass sich die Drehachse (D5) des ersten Umkehrvorgeleges (15) zwischen der Drehachse (D1) des ersten Antriebsrechens (12) und der Drehachse (D6) des ersten Rückzugsrechens (17) befindet.

12. Uhrenanzeigemechanismus (100) nach einem der Ansprüche 1 bis 11, **dadurch gekennzeichnet, dass** die Drehachse des zweiten Antriebsrechens (26) von der Drehachse des zweiten Rückzugsrechens (29) beabstandet ist, und dadurch, dass sich die Drehachse des zweiten Drehteils (210) zwischen der Drehachse des zweiten Antriebsrechens (26) und der Drehachse des zweiten Rückzugsrechens (29) befindet.

13. Uhrenanzeigemechanismus (100) Anspruch 12, **dadurch gekennzeichnet, dass** der zweite Antriebsrechen (26) angeordnet ist, um indirekt auf das zweite Drehteil (210) durch ein zweites Umkehrvorgelege hindurch, das mit dem zweiten Drehteil (210) eingreift, eine entgegengesetzte Beanspruchung zu einer Widerstandsbeanspruchung auszuüben, die direkt auf das zweite Drehteil (210) durch den zweiten Rückzugsrechen (29) ausgeübt wird, und dadurch, dass sich die Drehachse des zweiten Drehteils (210) zwischen der Drehachse des zweiten Antriebsrechens (26) und der Drehachse des zweiten Rückzugsrechens (29) befindet.

14. Uhrenanzeigemechanismus (100) nach einem der Ansprüche 1 bis 13, **dadurch gekennzeichnet, dass** das erste retrograde Antriebsmittel (10) angeordnet ist, um eine schleppende und eine rückläufige Bewegung der ersten Anzeigeeinheit (11) zu steuern, und dadurch, dass das zweite retrograde Antriebsmittel (20) angeordnet ist, um eine springende und eine rückläufige Bewegung der zweiten Anzeigeeinheit (12) zu steuern.

15. Uhrenanzeigemechanismus (100) nach einem der Ansprüche 1 bis 14, **dadurch gekennzeichnet, dass** der erste Rückzugsrechen (17) dauerhaft einem Rückzugsmoment unterliegt, das durch eine erste Hebelfeder (41) ausgeübt wird, und dadurch, dass der zweite Rückzugsrechen (29) dauerhaft einem Rückzugsmoment unterliegt, das durch eine zweite Hebelfeder (47) ausgeübt wird.

16. Uhrenanzeigemechanismus (100) nach einem der Ansprüche 1 bis 15, **dadurch gekennzeichnet, dass** gleichzeitig die Drehachse des ersten Antriebsrechens (12) von der Drehachse des ersten Rückzugsrechens (17) beabstandet ist, und die Drehachse des zweiten Antriebsrechens (26) von der Drehachse des zweiten Rückzugsrechens (29) beabstandet ist.

17. Uhrenanzeigemechanismus (100) nach einem der Ansprüche 1 bis 16, **dadurch gekennzeichnet, dass** die erste Anzeigeeinheit (11) eine Minutenanzeigeeinheit ist und die zweite Anzeigeeinheit (21) eine Stundenanzeigeeinheit ist.

18. Uhrenanzeigemechanismus (100) nach einem der Ansprüche 1 bis 16, **dadurch gekennzeichnet, dass** die erste Anzeigeeinheit (11) eine Stundenanzeigeeinheit ist und die zweite Anzeigeeinheit (21) eine AM-/PM- oder Tag-/Nacht- oder Datumsanzeigeeinheit ist.

19. Uhrenanzeigemechanismus (100) nach einem der Ansprüche 1 bis 16, **dadurch gekennzeichnet, dass** die erste Anzeigeeinheit (11) eine AM-/PM- oder Tag-/Nacht- oder Datumsanzeigeeinheit ist und die zweite Anzeigeeinheit (21) eine Monats- oder Mondmonatsanzeigeeinheit ist.

20. Uhrenanzeigemechanismus (100) nach einem der Ansprüche 1 bis 16, **dadurch gekennzeichnet, dass** die erste Anzeigeeinheit (11) eine Monats- oder Mondmonatsanzeigeeinheit ist und die zweite Anzeigeeinheit (21) eine Jahresanzeigeeinheit ist.

21. Uhrenanzeigemechanismus (100) nach Anspruch 10 und einem der Ansprüche 1 bis 20, **dadurch gekennzeichnet, dass** der Anzeigemechanismus (100) eine Datumsanzeigeeinheit beinhaltet, die ein Reibungsvorgelege beinhaltet, das in das Räderwerk zwischen dem beweglichem Triebbauteil (30) und der ersten Kurvenscheibe (34) integriert ist.

22. Uhrwerk (500), mindestens einen Uhrenanzeigemechanismus (100) nach einem der Ansprüche 1 bis 21 beinhaltend, und ein bewegliches Eingangsbauteil (30) beinhaltend, das angeordnet ist, um das erste retrograde Antriebsmittel (10) anzutreiben.

23. Uhr (1000), ein Uhrwerk (500) nach Anspruch 22, und/oder mindestens einen Anzeigemechanismus (100) nach einem der Ansprüche 1 bis 21, und ein Uhrwerk für eine Uhr (500) beinhaltend, das angeordnet ist, um ein bewegliches Eingangsbauteil (30) des Anzeigemechanismus (100) anzutreiben.

## Claims

1. Timepiece display mechanism (100) including at least a first retrograde drive means (10) for a first display member (11) displaying a first magnitude, and a second retrograde drive means (20) for a second display member (21) displaying a second magnitude, said first retrograde drive means (10) including a first drive rack (12) arranged to exert, directly or indirectly, on a first mobile component (16) driving said first display member (11), an opposite force to a resistance force exerted by a first return rack (17), and said second retrograde drive means (20) including a second drive rack (26) arranged to exert, directly or indirectly, on a second mobile component (210) driving said second display member (21), an opposite force to a resistance force exerted by a second return rack (29), the pivot axis of said first drive rack (12) being remote from the pivot axis of said first return rack (17) and/or the pivot axis of said second drive rack (26) being remote from the pivot axis of said second return rack (29), **characterized in that** said first retrograde drive means (10) includes a first cam (34) including a first ramp (35) arranged to drive a first feeler arm (14) comprised in said first drive rack (12) in an operating stroke in a first drive direction of said first display member (11), and which includes, on the largest diameter of said first ramp (35), a threshold (36) followed by a recess (37) for uncoupling of said first drive rack (12) arranged to allow said first feeler arm (14) to return to the smallest diameter of said ramp (35) by means of a return torque exerted indirectly on said first drive rack (12) by said first return rack (17) during an idle return stroke of said first return rack (17), and **in that** said first retrograde drive means (10) is arranged to drive said second retrograde drive means (20) by means of a click carrying a drive finger (19) arranged to drive an input mobile component (22) comprised in said second retrograde drive means (20) during said idle return travel.

2. Timepiece display mechanism (100) according to claim 1, **characterized in that** said first cam (34) is driven from a drive mobile component (30) arranged to be driven by a movement (500) or comprised in a movement (500).

3. Timepiece display mechanism (100) according to claim 2, **characterized in that** said first cam (34) is driven from said drive mobile component (30) via a train, which includes at least one friction connection arranged to allow adjustment of the position of said first display member (11).

4. Timepiece display mechanism (100) according to any of claims 1 to 3, **characterized in that** said first return rack (17) carries said drive finger (19) which pivots and is subjected to the torque of a return spring (43) fixed to said first return rack (17), and said drive finger (19) is arranged to drive a star comprised in said input mobile component (22) and which is arranged to drive in rotation a second cam (23) comprised in said second retrograde drive means (20).

5. Timepiece display mechanism (100) according to any of claims 1 to 4, **characterized in that** said second cam (23) includes a second ramp arranged to drive a second feeler arm (27) comprised in said second drive rack (26) in an operating stroke in a first drive direction of said second display member (12), and which includes, on the largest diameter of said second ramp, a threshold (24) followed by a recess (25) for uncoupling of said second drive rack (26) arranged to allow said second feeler arm (27) to return to the smallest diameter of said ramp (35) by means of a return torque exerted indirectly on said first drive rack (12) by said first return rack (17) during an idle return stroke of said first return rack (17), and **in that** said first retrograde drive means (10) is arranged to drive said second retrograde drive means (20) by means of said drive finger (19), which is coupled to said input mobile component (22) during said idle return stroke, and which is uncoupled from said input mobile component (22) during said operating stroke.

6. Timepiece display mechanism (100) according to claim 5, **characterized in that** said second cam (23) is a snail cam whose said second ramp is smooth.

7. Timepiece display mechanism (100) according to claim 5, **characterized in that** said second ramp of said second cam (23) is a stepped cam including a step for each unit of said second magnitude.

8. Timepiece display mechanism (100) according to any of claims 1 to 7, **characterized in that** said first drive rack (12) is arranged to indirectly exert on said first mobile component (16), via a first intermediate reverser (15) meshing with said first mobile component (16), an opposite force to a resistance force exerted directly on said first mobile component (16) by said first return rack (17), or **in that** said first drive rack (12) is arranged to exert directly on said first mobile component (16) an opposite force to a resistance force exerted indirectly on said first mobile component (16), via a first, intermediate return reverser meshing with said first mobile component (16), via said first return rack (17).

9. Timepiece display mechanism (100) according to any of claims 1 to 8, **characterized in that** said second drive rack (26) is arranged to exert indirectly on said second mobile component (210), via a second intermediate reverser meshing with said second mobile component (210), an opposite force to a resistance force exerted directly on said second mobile component (210) by said second return rack (29), or **in that** said second drive rack (26) is arranged to exert directly on said second mobile component (210) an opposite force to a resistance force exerted indirectly on said second mobile component (210),via a second intermediate return reverser meshing with said second mobile component (210), via said second return rack (29).

10. Timepiece display mechanism (100) according to any of claims 1 to 9, **characterized in that** said pivot axis (D1) of said first drive rack (12) is remote from the pivot axis (D6) of said first return rack (17), and **in that** the pivot axis of said first mobile component (16) is located between the pivot axis (D1) of said first drive rack (12) and the pivot axis (D6) of said first return rack (17).

11. Timepiece display mechanism (100) according to claim 10, **characterized in that** said first drive rack (12) is arranged to exert indirectly on said first mobile component (16), via a first intermediate reverser (15) meshing with said first mobile component 16), an opposite force to a resistance force exerted directly on said first mobile component (16) by said first return rack (17), and **in that** the pivot axis (D5) of said first intermediate reverser (15) is located between the pivot axis (D1) of said first drive rack (12) and the pivot axis (D6) of said first return rack (17).

12. Timepiece display mechanism (100) according to any of claims 1 to 11, **characterized in that** the pivot axis of said second drive rack (26) is remote from the pivot axis of said second return rack (29), and **in that** the pivot axis of said second mobile component (210) is located between the pivot axis of said second drive rack (26) and the pivot axis of said second return rack (29).

13. Timepiece display mechanism (100) according to claim 12, **characterized in that** said second drive rack (26) is arranged to exert indirectly on said second mobile component (210), via a second intermediate reverser meshing with said second mobile component (210), an opposite force to a resistance force exerted directly on said second mobile component (210) by said second return rack (29), and **in that** the pivot axis of said second intermediate reverser is located between the pivot axis of said second drive rack (26) and the pivot axis of said second return rack (29).

14. Timepiece display mechanism (100) according to any of claims 1 to 13, **characterized in that** said first retrograde drive means (10) is arranged to control a continuous-type retrograde movement of said first display member (11), and **in that** said second retrograde drive means (20) is arranged to control a jumping retrograde movement of said second display member (12).

15. Timepiece display mechanism (100) according to any of claims 1 to 14, **characterized in that** said first return rack (17) is permanently subjected to the return torque exerted by a first jumper spring (41), and **in that** said second return rack (29) is permanently subjected to the return torque exerted by a second jumper spring (47).

16. Timepiece display mechanism (100) according to any of claims 1 to 15, **characterized in that** the pivot axis of said first drive rack (12) is remote from the pivot axis of said first return rack (17) and the pivot axis of said second drive rack (26) is also remote from the pivot axis of said second return rack (29).

17. Timepiece display mechanism (100) according to any of claims 1 to 16, **characterized in that** said first display member (11) is a minute display member and said second display member (21) is an hour display member.

18. Timepiece display mechanism (100) according to any of claims 1 to 16, **characterized in that** said first display member (11) is an hour display member, and said second display member (21) is an AM/PM or day/night or date display member.

19. Timepiece display mechanism (100) according to any of claims 1 to 16, **characterized in that** said first display member (11) is an AM/PM or day/night or date display member, and said second display member (21) is a month or lunar month display member.

20. Timepiece display mechanism (100) according to any of claims 1 to 16, **characterized in that** said first display member (11) is a month or lunar month display member, and said second display member (21) is a year display member.

21. Timepiece display mechanism (100) according to claim 10 and to any of claims 1 to 20, **characterized in that** said display mechanism (100) includes a date display including an intermediate friction wheel which is incorporated in said train between said drive mobile component (30) and said first cam (34).

22. Timepiece movement (500) including at least one timepiece display mechanism (100) according to any of claims 1 to 21 and including an input mobile component (30) arranged to drive said first retrograde display means (10).

23. Watch (1000) including a movement (500) according to claim 22, and/or at least one display mechanism (100) according to any of claims 1 to 21 and a timepiece movement (500) arranged to drive an input mobile component (30) of said display mechanism (100).
